# EUROPÄISCHE PATENTSCHRIFT

(11) **EP 1 238 730 B1**
(45) Veröffentlichungstag und Bekanntmachung des Hinweises auf die Patenterteilung: **14.05.2008**
(21) Anmeldenummer: 01104537.4
(22) Anmeldetag: 05.03.2001
(51) Int. Cl.: B23B 31/12, B23B 31/16

(54) **Spannfutter**
Chuck
Mandrin de serrage

(43) Veröffentlichungstag der Anmeldung: 11.09.2002
(73) Patentinhaber: Illinois Tool Works, Inc., Glenview, Cook County, Illinois 60025 (US)
(72) Erfinder: Bohler, Erwin, 9553 Bettwiesen (CH)
(74) Vertreter: Blum, Rudolf Emil

(56) Entgegenhaltungen:
- DE-A- 4 132 841
- FR-A- 1 095 483
- GB-A- 148 383
- US-A- 1 844 616
- US-A- 4 796 900

## Beschreibung

Die Erfindung betrifft ein ausgleichendes Spannfutter für Werkzeugmaschinen, welches es gestattet, ein zwischen Spitzen eingespanntes Werkstück auch auf leicht exzentrischen Flächen zu fassen, ohne diese zu beschädigen oder unerwünschte Biegemomente auf das Werkstück auszuüben. Dies ist insbesondere dann nötig, wenn das Werkstück für eine äusserst genaue Bearbeitung zwischen Spitzen eingespannt ist, welche seine während der Bearbeitung eingehaltene Drehachse bestimmen, es aber gleichzeitig, zur Übertragung eines etwa für ein unrundes Schleifen notwendigen Drehmomentes, von der Zange eines Spannfutters gefasst werden muss. Wegen unvermeidlicher Toleranzen der von der Zange gefassten Werkstückfläche muss damit gerechnet werden, dass die Rotationsachse des Spannfutters - im Folgenden kurz Futterachse genannt - nicht exakt mit der durch die Spitzen bestimmten Drehachse des Werkstückes übereinstimmt.

Um einen ungleichen Druck der einzelnen Backen des Spannfutters auf die eingespannte Fläche, und das damit verbundene Auftreten unerwünschter Kräfte zu vermeiden, müssen sich die radialen Stellungen der Backen automatisch an eine eventuelle Exzentrizität der von den Backen gefassten Stellen des Werkstückes anpassen. Hierfür existieren Futter mit sogenannten Ausgleichsbacken, welche nicht zwangsweise alle den gleichen radialen Abstand von der Futterachse haben müssen, weil das Futter die auf die Backen einwirkenden Einspannkräfte automatisch ausgleicht. Dies kann beispielsweise durch eine für alle Backen geometrisch identisch ausgebildete, hydraulische Übertragung der Spannkräfte, oder mechanisch durch eine Taumelscheibe erreicht werden, welche die Spannkraft gleichmässig über alle Backen verteilt. Die dadurch erreichte, radiale Anpassung der Backenstellungen an die zwischen Drehachse und Futterachse bestehende Exzentrizität lässt aber ein weiteres, bei den heutigen, extrem hohen Ansprüchen an die Bearbeitungsgenauigkeit immer wichtiger werdendes Problem ausser acht, indem es zwar die radialen Abstände der Backen von der Drehachse korrigiert, nicht aber die durch die Exzentrizität bedingte, mangelnde Ausrichtung der Backen in Richtung der Drehachse. In fast allen Fällen fassen die Backen eine zylindrische Fläche des Werkstückes, und solange die greifenden Arbeitsflächen der Backen eben sind, genügt ein radialer Ausgleich der Backen, um das Werkstück sogar dann einwandfrei zu fassen, wenn die Achse der zylindrischen Fläche nicht mit der Futterachse übereinstimmt. Es liegen die ebenen Arbeitsflächen der Backen auch dann tangential an der zylindrischen Fläche des Werkstückes an, wenn infolge der Exzentrizität die Berührungslinien zwischen Backen und zylindrischer Fläche, im Schnitt gesehen, nicht exakt über 360° gleich verteilt sind. Um zu hohe lokale Drücke und damit die Beschädigung der zylindrischen Werkstückfläche zu vermeiden, wird es aber bei hohen Ansprüchen an die Präzision immer üblicher, die Arbeitsflächen der Backen als zur konvexen Werkstückfläche komplementäre, konkav zylindrische Flächenstücke mit praktisch demselben Radius auszubilden. Dadurch soll vermieden werden, dass die Backen mit übermässiger Kraft auf sehr kleine Flächenstücke des Werkstückes pressen.

Dabei entsteht jedoch folgendes Problem. Wenn die parallel zur Drehachse liegende Mittelebene einer Backe infolge einer bestehenden Exzentrizität die Drehachse meidet, d.h. neben dieser vorbeigeht, kommt die konkave Arbeitsfläche der Backe nicht satt auf die zugehörige konvexe zylindrische Fläche des Werkstückes zu liegen, sondern es trifft beim Spannen der Zange zuerst eine seitliche, achsparallele Kante der Backe auf den Zylinder, weil infolge der Exzentrizität im Schnitt (quer zur Drehachse) gesehen ein sichelförmiger, auf einer Seite in einer scharfen Kante endender Zwischenraum zwischen Arbeitsfläche und Zylinder entsteht. Dies hat einen asymmetrischen, am Ort der Kante lokal hohen Druck auf das Werkstück und ein bei hochpräziser Bearbeitung merkliches Verbiegen dieses Werkstückes zwischen den Spitzen zur Folge. Ausserdem können dadurch unerwünschte Druckstellen auf der Werkstückoberfläche auftreten.

Eine Möglichkeit, ein solch verkantetes Aufsitzen der Backen auf das Werkstück sowie das dadurch verursachte Verbiegen, und fallweise eine Beschädigung desselben zu vermeiden, besteht in der Verwendung von sogenannten Pendelbacken. Es sind dies zusätzliche Backen, welche auf die Grundbacken des Futters aufgesetzt sind und relativ zu diesen um eine zur Futterachse parallele Achse schwenken können. Dies kann beispielsweise erreicht werden, indem jede zusätzliche Backe durch einen zur Futterachse parallelen Bolzen so auf der zugehörigen Grundbacke montiert ist, dass sie um die Achse des Bolzens schwenken kann. Pendelbacken werden in erster Linie eingesetzt, wenn der auf das Werkstück ausgeübte Backendruck möglichst gleichmässig über den Umfang des Werkstückes verteilt werden soll, insbesondere wenn letzteres dünnwandig ist. Dann werden vorzugsweise Pendelbacken benützt, die sich tangential ziemlich weit beidseits ihres Bolzens erstrecken und deren gegen das Werkstück gerichtete Fläche so geformt ist, dass sie nur nahe bei ihren Extremitäten, d.h. an zwei, in entgegengesetzten Richtungen möglichst weit vom Schwenkbolzen entfernten, Stellen auf dem Werkstück aufliegt. Dadurch wird der auf dieses ausgeübte Druck besser über den Umfang des Werkstückes verteilt, bei einem Dreibackenfutter beispielsweise auf sechs Stellen anstatt nur auf drei wie bei der Verwendung von starren Backen. Die Schwenkbewegung verteilt den Druck jeder Grundbacke automatisch gleichmässig über beide Auflagestellen der an dieser befestigten Pendelbacke.

Sozusagen als Nebeneffekt korrigieren Pendelbacken auch eine eventuell fehlerhafte Ausrichtung der Grundbacken in Richtung der Drehachse des Futters, indem sich jede Pendelbacke beim Aufsitzen auf das Werkstück selbständig nach dessen Oberfläche ausrichtet, was ein verkantetes Aufsitzen der Backen auf das Werkstück verhindert. Dies bringt aber bei Futtern, die für ein extrem präzises Arbeiten vorgesehen sind, verschiedene Nachteile mit sich. Solche Futter sind in zunehmendem Mass nach aussen abgedichtet und mit Öl gefüllt, so dass die Lager ihrer gegenseitig beweglichen Teile in einem gegen Verschmutzung durch Schleifstaub und dergleichen geschützten Ölbad eingeschlossen sind, was ihren Verschleiss auf ein fast unmessbares Minimum reduziert. Pendelbacken und die Lager ihrer Schwenkbolzen liegen aber notwendigerweise ausserhalb der Futter-Abdichtung. Die somit ungeschützten, nicht in einem Ölbad laufenden Schwenkbolzenlager sind daher einer erhöhten Verschmutzung ausgesetzt, was eine erhöhte Abnützung und ein vorzeitiges Spiel zur Folge hat. Ausserdem stellen die Pendelbacken und ihre Lager zusätzliche, zwischen Grundbacken und Werkstück eingesetzte, bewegliche Teile dar, deren Anwesenheit der Präzision des Futters abträglich ist. Schliesslich erschweren die konstruktiv bedingten, relativ kleinen Abmessungen der Schwenkbolzen das Erreichen einer minimalen Abnützung. Aus diesen und anderen Gründen haben sich Pendelbacken als Mittel gegen ein verkantetes Aufsitzen der Backen auf dem Werkstück bei hochpräzisen Futtern nicht durchgesetzt.

DE 41 32 841 A1 offenbart ein Spannfutter, bei welchem das Spannzentrum radial verstellt werden kann. Hierzu weist das Spannfutter eine radial verstellbare Festbacke auf, welche keinen Spannhub ausführt, und zwei Spannbacken, welche den Spannhub ausführen. Die beiden Spannbacken sind radial verschieblich in Führungselementen gelagert, welche um parallel zur Spannfutterachse verlaufende Schwenkachsen verschwenkbar im Grundkörper des Spannfutters gelagert sind. Die Verschwenkung erfolgt dabei über einen Mechanismus in Abhängigkeit von der radialen Position der Festbacke.

Es ist ein Ziel der Erfindung, ein Spannfutter zu schaffen, das ein verkantetes Aufsitzen der Backen auf ein exzentrisch eingespanntes Werkstück vermeidet und dazu Teile verwendet, deren Lager im Innenraum eines abgedichteten Futters untergebracht werden können, wobei die notwendigen Schwenklager besonders gross, und somit abnützungsarm, dimensioniert werden können. Zudem weist das erfindungsgemässe Futter verhältnismässig wenig Teile auf, indem seine Grundbacken gleichzeitig zwei Aufgaben übernehmen, nämlich sowohl das Fassen des Werkstückes durch eine radiale Bewegung wie auch die zur Vermeidung des Verkantens notwendige Schwenkung.

Zu diesem Zweck ist die Erfindung wie im Hauptanspruch beschrieben definiert. Sie soll nunmehr anhand der Beschreibung eines Ausführungsbeispieles und mit Hilfe der Zeichnung näher erläutert werden.

Es zeigt:
Figur 1 einen schematischen Schnitt durch ein bekanntes Futter und ein darin eingespanntes Werkstück, quer zu deren Achsen,
Figur 2 einen zur Figur 1 analogen Schnitt durch eine Ausführungsform der Erfindung im Augenblick, da beim Schliessen des Futters dessen Backen auf das Werkstück auftreffen,
Figur 3 einen stark schematisierten und nicht massstäblichen, teilweisen Schnitt längs der Linie III-III der Figur 2, und
Figur 4 denselben Schnitt wie in der Figur 2, jedoch nach dem vollständigen Schliessen des Futters.

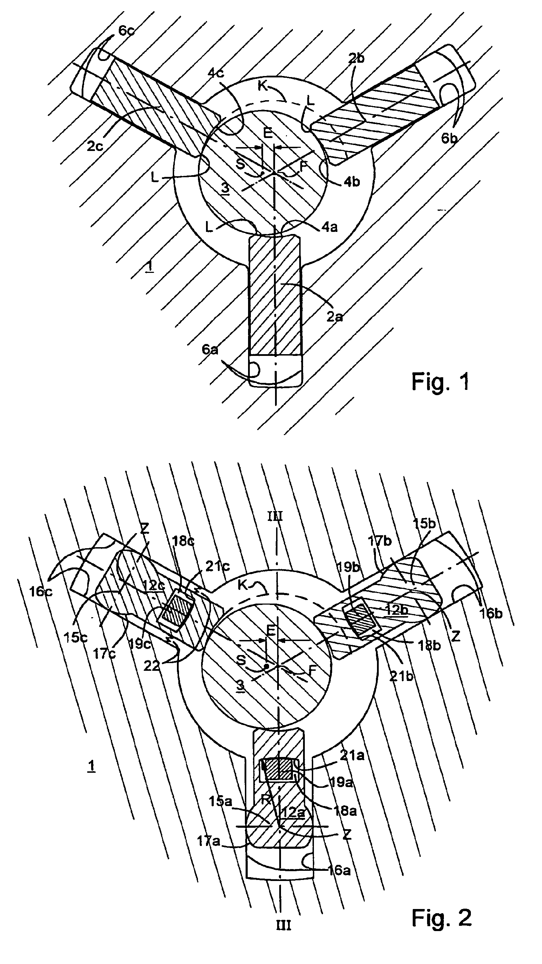

Die Figur 1 zeigt einen stark schematisierten Schnitt senkrecht zur Drehachse eines bekannten Spannfutters 1 einer Werkzeugmaschine, quer durch die Backen 2a, 2b, 2c und durch ein zu bearbeitendes Werkstück 3. Dieses ist in der (nicht gezeigten) Werkzeugmaschine zwischen (ebenfalls nicht gezeigten) Spitzen eingespannt, deren Achse im wesentlichen senkrecht zur Zeichenebene liegt und diese im Punkt S durchstösst, während die Drehachse des Futters die Zeichenebene im Schnittpunkt F der Mittelebenen der Backen 2 durchstösst. Der Deutlichkeit halber wurde die durch unvermeidliche Fehler bedingte Exzentrizität, d.h. der Abstand E zwischen den im wesentlichen parallelen Achsen S und F, übertrieben gross dargestellt. Aus demselben Grund wurden die üblicherweise auf den Grundbacken angebrachten Aufsatzbacken ausgelassen, die meist vorgesehen sind um das Werkstück schonend zu fassen. Zu diesem Zweck weisen sie in der Regel eine an die zu fassende Stelle des Werkstückes angepasste Form auf. Im gezeigten Beispiel wird das Werkstück jedoch der Einfachheit halber direkt von den Backen 2 gefasst, deren Arbeitsflächen 4a, 4b, 4c deshalb hohlzylindrisch ausgebildet sind, mit einem Radius der praktisch gleich dem der zu fassenden, zylindrischen Oberfläche des Werkstükkes 3 ist.

Die Backen 2 laufen in Führungen 6a, 6b, 6c des Spannfutters 1, die in einer 120° Teilung um seine Drehachse F herum angeordnet sind, und können in bekannter Weise durch einen (nicht gezeigten), mechanischen oder hydraulischen Antrieb radial gegen das Werkstück 3 gepresst werden, z.B. um diesem ein für das Schleifen genügendes Drehmoment zu erteilen. Weil sich das zwischen (nicht gezeigten) Spitzen eingespannte Werkstück um deren Achse S dreht, welche wegen unvermeidlicher Fehler nicht mit der Futterachse F zusammenfällt, ist der Backenantrieb so ausgebildet, dass trotz des Abstandes zwischen S und F alle Backen denselben Druck auf das Werkstück 3 ausüben, obwohl sie im Augenblick ihrer Berührung mit diesem radial verschieden weit ausgefahren sind, wie aus der Figur ersichtlich ist. Dieser Unterschied ist für die Backen 2b und 2c durch den zu F konzentrischen, gestrichelten Kreisbogen K hervorgehoben.

Trotz dieses bekannten, automatischen Ausgleiches ist der in Figur 1 gezeigte Zustand unbefriedigend, weil infolge der bestehenden Exzentrizität jede Backe nur längs einer, in der Figur als Punkt sichtbaren Kante L auf dem Werkstück aufliegt. Bei dem, etwa für ein sogenanntes Unrundschleifen (insbesondere von Kurbelwellen) benötigten grossen Drehmoment und dem für seine Übertragung entsprechend hohen Druck der Backen auf das Werkstück, kann dieses dadurch an den Druckstellen L verletzt und sogar zwischen seinen Einspannstellen in den Spitzen merklich durchgebogen werden. Bei hohen Ansprüchen beeinträchtigt dies die Präzision des Schleifens unzulässig.

Die Figur 2 zeigt einen zur Figur 1 analogen, schematischen Schnitt durch ein erfindungsgemässes Spannfutter in dem Augenblick da seine Backen beim Schliessen auf das Werkstück treffen, wobei einander entsprechende Teile gleiche oder um 10 höhere Bezugszahlen tragen.

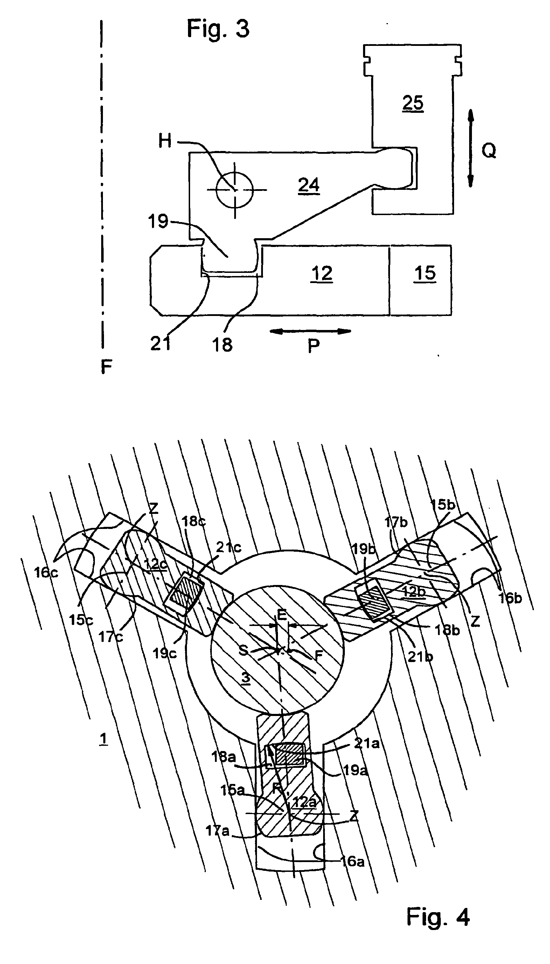

Das Spannfutter 1 weist wie in der Figur 1 drei in 120°-Teilung angeordnete, radiale Führungen 16a, 16b, 16c auf, jedoch sind die Backen in anderer Weise geführt, indem jede Backe 12a, 12b, 12c einen verdickten, als Gleitstein bezeichneten Teil 15a, 15b, 15c aufweist, der in der zugehörigen Führung gleiten kann. In der einfachsten, hier gezeigten Ausführung sind die seitlichen Flächen 17a, 17b, 17c der Gleitsteine zylindrisch, mit einer zur Futterachse F parallelen Achse Z ausgebildet, derart, dass die Gleitsteine 15, und mit ihnen die Backen 2, ohne zu kippen spielfrei in den Führungen 16 gleiten, und ausserdem um einen gewissen Betrag um die Achse Z schwenken können. Die Arbeitsflächen 17 der Gleitsteine können aber auch anders geformt sein, z.B. tonnenförmig. In jeder Backe 2 ist eine Öffnung oder eine Tasche 18a, 18b, 18c vorgesehen, in welche je ein durch den (nicht gezeigten) Backenantrieb radial bewegter Finger 19a, 19b, 19c greift. Die radial nach aussen zeigende Fläche 21a, 21b, 21c jeder Öffnung ist ein hohlzylindrisches Flächenstück, dessen Achse mit der Schwenkachse Z des entsprechenden Gleitsteines 15 zusammenfällt, wie dies für die Backe a durch den Radius R hervorgehoben ist. Falls sich der Finger 19 radial geradlinig bewegt, bildet eine radial nach innen zeigende Fläche des Fingers 19 eine konvexe, zur Fläche 21 komplementäre, zylindrische Fläche mit annähernd demselben Radius. Falls (wie aus der Figur 3 ersichtlich) der Finger 19 an einem Ende eines Winkelhebels liegt und sich daher nur angenähert radial längs eines kurzen Kreisbogens bewegt, weist seine radial einwärts zeigende Fläche vorzugsweise ausserdem eine Krümmung um eine zur Hebelachse parallele Achse auf und ist daher tonnenförmig. Wenn eine Backe 2 durch den Druck des zugehörigen Fingers 19 radial einwärts gepresst wird, kann sie daher um einen gewissen Winkel um die Achse Z ihres Gleitsteines schwenken, ohne dass sich dessen radiale Stellung ändert. Das Ausmass der möglichen Schwenkung hängt in erster Linie vom Unterschied zwischen der Breite des Fingers 19 und derjenigen der Öffnung oder Tasche 18 ab, welche ihn aufnimmt.

Die maximal mögliche Schwenkung übersteigt jedenfalls nicht einige Grad, und beeinträchtigt daher nicht das allfällige Anbringen von (nicht gezeigten) elastischen Dichtungen zwischen jeder Backe und dem Körper des Futters. Solche Dichtungen sind bei Hochpräzisions-Futtern oft vorgesehen um den inneren Mechanismus des Futters gegen Schleifstaub und ähnliches zu schützen und damit seine Genauigkeit über lange Zeit zu erhalten. Für extreme Ansprüche kann das Innere des Futters auch mit einem Ölbad gefüllt sein, welches die Dichtungen benötigt, um ein Auslaufen zu verhindern.

Es können federnde Rückhol-Organe vorgesehen sein, um die Backen 12 in eine 120°-Teilung, d.h. in die in Fig. 2 gezeigte Ruhestellung parallel zu ihren Führungen zurückzuholen, wenn keine wesentlichen tangentialen Kräfte auf sie einwirken. Diese Möglichkeit ist, rein schematisch und der Einfachheit halber nur bei der oberen linken Backe der Fig. 2, durch zwei federnde Elemente 22 angedeutet, welche in Abwesenheit anderer Belastungen die Längsachse der Backe annähernd parallel zu ihrer Führung halten. Bei hinreichend kleiner Exzentrizität E ist dies zwar nicht notwendig, wurde hier aber angenommen, um eine die Beschreibung der Funktionsweise vereinfachende, in der Fig. 2 gezeigte Grundstellung zu erhalten.

Die Figur 3 zeigt einen schematisierten, teilweisen Schnitt längs der Linie III-III der Figur 2, wobei das Werkstück ausgelassen wurde, seine ungefähre Lage jedoch durch die Achse F angezeigt ist. Da die dargestellte Anordnung für jede der drei Backen der Figur 2 einmal vorkommt, wurden die Zusatzbezeichnungen a, b, c hier ausgelassen. Ein Doppelpfeil P zeigt die zum Fassen des nicht gezeigten Werkstückes nötige Bewegung der Backe 12 in Richtung der Futterachse F, wobei der Gleitstein 15 in der (in Figur 3 nicht gezeigten) Führung 16 gleitet. Die Bewegung der Backe 12 in Richtung des Doppelpfeiles P wird durch einen Winkelhebel 24 bewirkt, der um eine Achse H schwenken kann und dessen Finger 19 in die Tasche 18 der Backe 12 greift. Die Achse H steht senkrecht zur Achse F des Futters, und die Schwenkung des Winkelhebels 24 wird durch einen (in nicht gezeigter Weise) hydraulisch angetriebenen Kolben 25 bewirkt, der sich, wie durch den Doppelpfeil Q gezeigt, parallel zur Futterachse bewegt. Um beim Schwenken des Hebels 24 eine einwandfreie Kraftübertragung vom Finger 19 auf die Backe 12 zu erhalten, weist der Finger eine im Schnitt der Figur 3 sichtbare Rundung seiner Arbeitsflächen auf. Zusammen mit der in Figur 2 sichtbaren Rundung des Fingers in einer zur Figur 3 senkrechten Ebene, gibt dies dem Finger 19 über mindestens einen Teil seines Umfanges eine fassähnliche Form.

Es wird nun angenommen, dass ein erfindungsgemässes Futter, dessen Backen sich in Ruhestellung befinden, allmählich auf ein exzentrisch eingespanntes Werkstück angezogen wird. Wenn die Backen auf dieses auftreffen, gleicht die (nicht gezeigte) bekannte radiale Ausgleichsvorrichtung des Backenantriebes den Vorschub der einzelnen Backen so aus, dass diese alle mit dem Werkstück in Kontakt kommen, bevor ein wesentlicher und für alle Backen gleicher Druck auf das Werkstück ausgeübt wird. In diesem Augenblick ergibt sich die in Fig. 2 gezeigte (und zur Figur 1 analoge) Lage, bei der die Backen nicht satt auf der Oberfläche des Werkstückes aufliegen, sondern dieses längs der Backen-Kanten L berühren. Bei einem weiteren Anstieg der Einspannkraft, d.h. unter zunehmendem, radial einwärts gerichteten Druck der Finger 19, wirken wegen des schrägen Sitzes der Backen auf dem Werkstück tangentiale Kräfte auf die Backen, und es schwenken diese um ihre jeweilige Achse Z bis die Arbeitsflächen sämtlicher Backen 12 satt auf dem Werkstück 3 aufliegen, wie in Figur 4 gezeigt. Das Werkstück wird dadurch schonend gefasst, und auch bei hohem Auflagedruck der Backen nicht beschädigt, obwohl sich die durch die Finger 19 ausgeübten Kräfte in der Futterachse F schneiden, und nicht in der um die Exzentrizität E davon entfernten Drehachse S des Werkstückes 3.

Es sei noch ausdrücklich bemerkt, dass die im hier beschriebenen Ausführungsbeispiel gewählte Lage der Öffnungen oder Taschen 18 (und damit der Finger 19) zwischen der Schwenkachse Z und der Greiffläche der zugehörigen Backe willkürlich ist. Je nach dem mechanischen Aufbau des Futters kann eine andere Lage günstiger sein, etwa indem Finger und Öffnung radial weiter von der Futterachse entfernt sind, als die Schwenkachse Z, oder gar indem sich der Finger am Ort dieser Schwenkachse befindet, wodurch die Finger auch bei grossem Schliessdruck des Futters kein merkliches bremsendes Moment auf die Schwenkung der Backe ausüben. Obwohl nur eine Ausführungsform des erfindungsgemässen Futters mit drei Backen beschrieben wurde, weil dies die weitaus üblichste Anordnung ist, können in gleicher Weise erfindungsgemässe Futter mit einer anderen Anzahl Backen, insbesondere zwei oder vier, realisiert werden. Ebenso können die hier durchgehend als "Backen" bezeichneten Teile sogenannte Grundbacken sein, welche das Werkzeug nicht direkt greifen, sondern vorgesehen sind, um an dessen Form angepasste Aufsatzbacken zu tragen.

## Patentansprüche

1. Spannfutter (1) für eine Werkzeugmaschine, umfassend Backen (12a, 12b, 12c) mit zwei Freiheitsgraden bezüglich dem Grundkörper des Futters (1), einen zur Drehachse (F) des Futters (1) im wesentlichen radial gerichteten, translatorischen Freiheitsgrad, und einem beschränkten Rotations-Freiheitsgrad um eine zur Drehachse (F) des Futters im wesentlichen parallele Schwenkachse (Z), welche den radialen Bewegungen der betreffenden Backe (12a, 12b, 12c) folgt, **dadurch gekennzeichnet, dass** jede Backe (12a, 12b, 12c) einen mindestens teilweise um die Schwenkachse (Z) rotationssymmetrischen, in einer radialen Führung (16a, 16b, 16c) des Futters (1) gleitenden Gleitstein (15a, 15b, 15c) aufweist.

2. Spannfutter (1) nach Anspruch 1, **dadurch gekennzeichnet, dass** jede Backe (12a, 12b, 12c) eine von der Rotationsachse (F) des Futters (1) wegweisende, mindestens teilweise um die Schwenkachse (Z) rotationssymmetrische Auflagefläche (21a, 21b, 21c) aufweist, um den Druck eines die Spannkraft des Futters (1) auf die Backe (12a, 12b, 12c) übertragenden Übertragungsorganes(19a, 19b, 19c) aufzunehmen.

3. Spannfutter (1) nach Anspruch 2, **dadurch gekennzeichnet, dass** die Auflagefläche (21a, 21b, 21c) durch eine Wand einer aus der Backe (12a, 12b, 12c) ausgenommenen Tasche (18a, 18b, 18c) gebildet wird.

4. Spannfutter (1) nach Anspruch 2 oder 3, **dadurch gekennzeichnet, dass** das Übertragungsorgan (19a, 19b, 19c) ein Hebel (24) ist, der um eine zur Drehachse (F) des Futters (1) sowie zur radialen Bewegung der Backe im wesentlichen senkrechte, ausserhalb der Backe (12a, 12b, 12c) liegende Achse (H) schwenkbar ist, und dessen auf die Backe einwirkende Fläche mindestens teilweise rotationssymmetrisch um die Achse ist.

5. Spannfutter (1) nach einem der Ansprüche 2 bis 4, **dadurch gekennzeichnet, dass** die Auflagefläche (21a, 21b, 21c) zwischen der das Werkstück oder einer dieses fassenden Aufsatzbacke tragenden Grifffläche der Backe und der Schwenkachse (Z) liegt.

6. Spannfutter (1) nach einem der Ansprüche 2 bis 4, **dadurch gekennzeichnet, dass** die Auflagefläche (21a, 21b, 21c) weiter von der das Werkstück oder einer dieses fassenden Aufsatzbacke tragenden Grifffläche der Backe (12a, 12b, 12c) entfernt ist als die Schwenkachse (Z).

7. Spannfutter (1) nach einem der vorangehenden Ansprüche, **gekennzeichnet durch** eine federnde Rückholvorrichtung, um die Backen (12a, 12b, 12c) bei offenem Futter (1) in eine Stellung zurückzurufen, in der sie auf die Rotationsachse (F) des Futters (1) weisen.

8. Spannfutter (1) nach einem der vorangehenden Ansprüche, **dadurch gekennzeichnet, dass** der Rotationsfreiheitsgrad auf weniger als 5° beschränkt ist.

## Claims

1. Chuck (1) for a machine tool, including jaws (12a, 12b, 12c) with two degrees of freedom in relation to the base body of the chuck (1), one degree of translational freedom which is directed substantially radially to the axis (F) of rotation of the chuck (1) and one degree of limited rotational freedom about a pivot axis (Z) which is substantially parallel to the axis of rotation (F) of the chuck and which follows the radial movements of the jaw concerned (12a, 12b, 12c), **characterised in that** each jaw (12a, 12b, 12c) has a sliding block (15a, 15b, 15c) which is at least partially rotationally symmetrical about the pivot axis (Z) and slides in a radial guide (16a, 16b, 16c) of the chuck (1).

2. Chuck (1) according to claim 1, **characterised in that** each jaw (12a, 12b, 12c) has a bearing surface (21a, 21b, 21c) which faces away from the axis of rotation (F) of the chuck (1) and is at least partially rotationally symmetrical about the pivot axis (Z), for taking up the pressure of a transmission member (19a, 19b, 19c) which transmits the clamping force of the chuck (1) to the jaw (12a, 12b, 12c).

3. Chuck (1) according to claim 2, **characterised in that** the bearing surface (21a, 21b, 21c) is formed by a wall of a compartment (18a, 18b, 18c) taken out of the jaw (12a, 12b, 12c).

4. Chuck (1) according to claim 2 or 3, **characterised in that** the transmission member (19a, 19b, 19c) is a lever (24) which is pivotable about an axis (H) which is substantially perpendicular to the axis of rotation (F) of the chuck (1) and to the radial movement of the jaw and which lies outside the jaw (12a, 12b, 12c), and of which the surface acting on the jaw is at least partially rotationally symmetrical about the axis.

5. Chuck (1) according to any of claims 2 to 4, **characterised in that** the bearing surface (21a, 21b, 21c) is located between the pivot axis (Z) and the gripping surface of the jaw which carries the work piece or an add-on jaw which holds the latter.

6. Chuck (1) according to any of claims 2 to 4, **characterised in that** the bearing surface (21a, 21b, 21c) is further away than the pivot axis (Z) from the gripping surface of the jaw (12a, 12b, 12c) which carries the work piece or an add-on jaw which holds the latter.

7. Chuck (1) according to any of the preceding claims, **characterised by** a spring return device for returning the jaws (12a, 12b, 12c) when the chuck (1) is open into a position in which they face towards the axis of rotation (F) of the chuck (1).

8. Chuck (1) according to any of the preceding claims, **characterised in that** the degree of rotational freedom is limited to less than 5°.

## Revendications

1. Mandrin de serrage (1) pour une machine-outil, comprenant des mâchoires (12a, 12b, 12c) avec deux degrés de liberté par rapport au corps de base du mandrin (1), un degré de liberté de translation, orienté sensiblement radialement par rapport à l'axe de rotation (F) du mandrin (1), et un degré de liberté de rotation limité autour d'un axe de basculement (Z) sensiblement parallèle à l'axe de rotation (F) du mandrin, lequel axe suit les mouvements radiaux de la mâchoire (12a, 12b, 12c) concernée, **caractérisé en ce que** chaque mâchoire (12a, 12b, 12c) présente un coulisseau (15a, 15b, 15c) symétrique en rotation au moins partiellement autour de l'axe de basculement (Z), glissant dans une direction radiale (16a, 16b, 16c) du mandrin (1).

2. Mandrin de serrage (1) selon la revendication 1, **caractérisé en ce que** chaque mâchoire (12a, 12b, 12c) présente une surface d'appui (21a, 21b, 21c) partant de l'axe de rotation (F) du mandrin (1) et symétrique en rotation au moins en partie autour de l'axe de basculement (Z), afin de recevoir la pression d'un organe de transmission (19a, 19b, 19c) transmettant la force de serrage du mandrin (1) à la mâchoire (12a, 12b, 12c).

3. Mandrin de serrage (1) selon la revendication 2, **caractérisé en ce que** la surface d'appui (21a, 21b, 21c) est formée par une paroi d'une poche (18a, 18b, 18c) enlevée de la mâchoire (12a, 12b, 12c).

4. Mandrin de serrage (1) selon la revendication 2 ou 3, **caractérisé en ce que** l'organe de transmission (19a, 19b, 19c) est un levier (24) qui peut basculer autour d'un axe (H) sensiblement perpendiculaire à l'axe de rotation (F) du mandrin (1) et au mouvement radial de la mâchoire et situé à l'extérieur de la mâchoire (12a, 12b, 12c), et dont la surface agissant sur la mâchoire est au moins en partie symétrique en rotation autour de l'axe.

5. Mandrin de serrage (1) selon l'une quelconque des revendications 2 à 4, **caractérisé en ce que** la surface d'appui (21a, 21b, 21c) est située entre la surface de préhension portant la pièce ou une mâchoire rapportée saisissant cette pièce, de la mâchoire et de l'axe de pivotement (Z).

6. Mandrin de serrage (1) selon l'une quelconque des revendications 2 à 4, **caractérisé en ce que** la surface d'appui (21a, 21b, 21c) est éloignée davantage de la surface de préhension, portant la pièce ou une mâchoire rapportée saisissant cette pièce, de la mâchoire (12a, 12b, 12c) que l'axe de basculement (Z).

7. Mandrin de serrage (1) selon l'une quelconque des revendications précédentes, **caractérisé par** un dispositif de rappel élastique, afin de rappeler les mâchoires (12a, 12b, 12c), lorsque le mandrin (1) est ouvert, dans une position dans laquelle elles sont dirigées vers l'axe de rotation (F) du mandrin (1).

8. Mandrin de serrage (1) selon l'une quelconque des revendications précédentes, **caractérisé en ce que** le degré de liberté de rotation est limité à moins de 5°.
